# EUROPÄISCHE PATENTSCHRIFT

(11) **EP 2 366 489 B1**
(45) Veröffentlichungstag und Bekanntmachung des Hinweises auf die Patenterteilung: **26.09.2012**
(21) Anmeldenummer: 11158218.5
(22) Anmeldetag: 15.03.2011
(51) Int. Cl.: B23P 11/00, E06B 3/273

(54) **Vorrichtung zum Einpressen von Isolierstegen**
Device for pressing in insulating strips
Dispositif de mise en place par pression de barrettes isolantes

(30) Priorität: 15.03.2010 EP 10156495
(43) Veröffentlichungstag der Anmeldung: 21.09.2011
(73) Patentinhaber: Alcoa Aluminium Deutschland, Inc., 58642 Iserlohn (DE)
(72) Erfinder: Chinn, Keith, Warrington WA5 3RY (GB)
(74) Vertreter: Trinks, Ole

(56) Entgegenhaltungen:
- EP-A1- 0 082 468
- EP-A1- 0 765 989
- EP-A2- 0 311 850
- CA-A1- 1 273 556
- DE-U- 7 537 337
- GB-A- 1 535 461

## Beschreibung

Die vorliegende Erfindung betrifft eine Vorrichtung zum Einpressen von Isolierstegen in Rahmenprofile nach dem Oberbegriff des Patentanspruches 1. Eine solche Vorrichtung ist aus der DE 75 37 337 U bekannt.

Demgemäß betrifft die Erfindung eine Vorrichtung zum Einpressen von Isolierstegen in Nutleisten eines Rahmenprofils, insbesondere eines Aluminium-Rahmenprofils, bei der Herstellung von Verbundprofilen, wobei die Vorrichtung eine erste Walze mit einer Rotationsachse aufweist.

Die Druckschrift DE 75 37 337 U betrifft ein wärmegedämmtes Verbundprofil, insbesondere für Fenster, Türen oder Fassaden, bestehend aus zwei Metallschalen, die im Abstand voneinander gehalten und über zwei in Nuten der Metallschalen eingesetzte Isolierstäbe miteinander verbunden sind. Dabei ist vorgesehen, dass die Nutinnenstege über einen Dorn in Aussparungen der Isolierstäbe eingeformt werden, wobei sich diese Aussparungen der Isolierstäbe über die gesamte Länge der Isolierstäbe erstrecken. Der Dorn wird durch die Innenkammer des Verbundprofils geführt und stützt sich an den zu verformenden Nutstegen ab.

Die Druckschrift EP 0 082 468 A1 betrifft ein Verfahren sowie eine Vorrichtung zur Herstellung eines wärmegedämmten Verbundprofils für Fenster, Türen oder dergleichen. Dabei werden zwei strangepresste Metallprofile aus Leichtmetall in Distanz zueinander festgespannt und mit zwei ebenfalls voneinander distanzierten Isolierstäben verformungstechnisch verbunden. Jeder hammerkopfartig ausgebildete Rand beider Isolierstäbe wird von Nutleisten der Metallprofile begrenzt, wobei ein innen liegendes Nutleistenpaar gegen den einen Isolierstab und ein außen liegendes Nutleistenpaar gegen den anderen Isolierstab gleichzeitig, also in einem Verfahrensgang verformt werden.

Die Druckschrift EP 0 311 850 A2 betrifft ein Verbundprofil, insbesondere für Fenster, Türen und Fassaden, bei welchen zwei Metallprofile über mindestens ein in Nuten zwischen Schenkeln der Metallprofile eingreifendes Isolierprofil in Abstand voneinander verbunden sind. Das Isolierprofil weist mindestens ein durch unterschiedliche Materialdicken gebildetes, in Längsrichtung verlaufendes Wellenprofil am zum Eingriff in Nuten der Metallprofile bestimmte Bereiche auf.

Zur Wärmeisolation von Fenster- und Türrahmen ist es bekannt, Rahmenprofile aus zwei voneinander beabstandeten Rahmenprofilteilen herzustellen. Insbesondere handelt es sich dabei gewöhnlich um Rahmenprofilteile, welche eine außenseitige Profilkammer sowie eine innenseitige Profilkammer, welche über Isolierstege miteinander verbunden sind, aufweisen. Um die Isolierstege mit den Rahmenprofilteilen kraftschlüssig verbinden zu können, greifen die Isolierstege in sogenannte Nutleisten ein, welche an den Seiten der Rahmenprofilteile gebildet sind. Sobald die Isolierstege in einem ersten Schritt mit etwas Spiel in die Nutleisten eingeführt worden sind, werden die Nutleisten in einem nächsten Schritt durch mechanische Krafteinwirkung zusammengepresst und die Isolierstege in ihrer Position fixiert.

Die Verformung der Nutleisten wird bei dem aus dem Stand der Technik bekannten Verfahren durch eine Walze ausgeführt. Diese wird mit einer vorbestimmten Anpresskraft über die Nutleisten bewegt, um selbige in Richtung des Isolierstegs zu verbiegen und den Isoliersteg damit einzuschließen. Es ist demnach erforderlich, dass die Walzvorrichtung in den Zwischenraum der außenseitigen Rahmenprofilteile eindringen kann, um die Nutleisten zu kontaktieren und verformen zu können.

Ein Nachteil dieser herkömmlichen, aus dem Stand der Technik bekannten Vorrichtungen zum Einpressen von Isolierstegen resultiert aus der Komplexität der heutigen Metall-Rahmenprofilteile. Diese können je nach Anwendungsgebiet sehr verwinkelt ausgeführt sein und über Eckbereiche mit kleinsten Dimensionen verfügen. Aus diesem Grund gelingt es mit den bekannten Walzvorrichtungen oftmals nicht, Isolierstege mit optimaler Breite zu konstruieren, da das Einpressen nur an leicht zugänglichen Bereichen des Zwischenraums der Rahmprofilteile möglich ist. Hierdurch entsteht ein Verlust an Raum, welcher für die Isolierstege genutzt werden könnte, was eine geringere Wärmedämmung bedeutet.

Auf Grundlage dieser Problemstellung liegt der vorliegenden Erfindung die Aufgabe zugrunde, eine Vorrichtung zum Einpressen von Isolierstegen anzugeben, die derart ausgebildet ist, dass ein Einpressen der Nutleisten auch in Eckbereichen der Rahmenprofilkonstruktion ermöglicht wird. Ferner ist es eine Aufgabe der Erfindung, eine derartige Vorrichtung anzugeben, welche mit wenig Aufwand an eine aus dem Stand der Technik bekannte Walze adaptierbar ist.

Diese Aufgaben werden erfindungsgemäß durch den Gegenstand des unabhängigen Patentanspruches 1 gelöst. Vorteilhafte Weiterbildungen sind in den Unteransprüchen angegeben.

Die erfindungsgemäße Vorrichtung zeichnet sich durch mindestens einen Walzenträger aus, welcher mit der Rotationsachse der ersten Walze verbindbar und ausgebildet ist, mindestens eine zweite Walze, welche einen kleineren Durchmesser als die erste Walze aufweist, aufzunehmen.

Durch den oben genannten Lösungsansatz ergibt sich eine Vielzahl von Vorteilen gegenüber dem bisherigen Stand der Technik. So können mit der erfindungsgemäßen Lösung Rahmenprofile mit verbreiterten Isolierstegen hergestellt werden. Daraus resultieren entsprechend höhere Wärmedämmeigenschaften der Rahmenprofilkonstruktion. Alternativ ist es selbstverständlich auch denkbar, die Größe der Isolierstege beizubehalten und unter besserer Ausnutzung des Zwischenraums schmälere Rahmenprofile herzustellen. Ferner werden durch die Erfindung im Vergleich zu herkömmlichen Lösungen geringere Mengen an Aluminium für die Konstruktion der Rahmenprofile benötigt, da größere Bereiche der Rahmenprofilkonstruktion mit Isolierstegen versehen werden können. Da die erfindungsgemäße Lösung problemlos auf die aus dem Stand der Technik bekannte Lösung übertragen werden kann, ist es weiterhin möglich herkömmliche Walzen einfach und kostengünstig nachzurüsten.

Bei der Vorrichtung zum Einpressen von Isolierstegen ist erfindungsgemäß vorgesehen, dass der mindestens eine Walzenträger mindestens zwei zweite Walzen aufnimmt und ausgebildet ist, dass die mindestens zwei zweiten Walzen in Kontakt mit der ersten Walze stehen. Mit dieser Ausführungsvariante wird erreicht, dass der Walzenträger sowie die beiden zweiten Walzen stabil an der ersten Walze angebracht sind. Durch den Kontakt kann darüber hinaus die Rotationsbewegung der ersten Walze dazu genutzt werden, die mindestens zwei zweiten Walzen anzutreiben. Selbstverständlich sind dabei die beiden zweiten Walzen auf einer anderen Ebene bewegbar als die erste Walze, um eine Verschlechterung der Laufeigenschaften der Verformungsvorrichtung zu verhindern.

Gemäß einer Ausführungsform ist es vorgesehen, dass die mindestens zwei zweiten Walzen einen unterschiedlichen Durchmesser aufweisen, um ein sequentielles Verformen der Nutleisten zu ermöglichen. Der Vorteil dieser Alternative liegt darin, dass Verformungsarbeit, welche bei Verformung der Nutleisten aufzuwenden ist, auf mehrere (mindestens zwei) zweite Walzen aufgeteilt werden kann. Dadurch kann der Verformungsvorgang in einzelne Schritte unterteilt werden, wodurch eine verringerte Kraft zum Verbiegen der Nutleiste benötigt wird, was sich ferner schonend auf das Material der Nutleisten auswirkt. Beispielsweise kann dazu diejenige zweite Walze, welche zuerst in Kontakt mit den Nutleisten kommt, einen kleineren Durchmesser aufweisen, um die Nutleiste nur zu einem gewissen Teil zu verformen.

Nach einer weiteren Umsetzung der erfindungsgemäßen Vorrichtung zum Einpressen von Isolierstegen ist der Walzenträger derart ausgebildet ist, dass eine erste der mindestens zwei zweiten Walzen vor der ersten Walze und eine zweite der mindestens zwei zweiten Walzen hinter der ersten Walze positioniert ist, um auf diese Weise die Anpresskraft der ersten Walze auf die zwei zweiten Walzen gleichmäßig verteilen zu können. Durch das Anbringen je einer zweiten Walze vor und hinter der ersten Walze ist es möglich, den Anpressdruck der ersten Walze gleichmäßig auf die mindestens zwei zweiten Walzen zu verteilen.

Im Folgenden wird ein bevorzugtes Ausführungsbeispiel der Erfindung anhand der Zeichnungen näher erläutert.

Es zeigen:
- Fig. 1: eine Schnittansicht durch ein Rahmenprofil mit einer aus dem Stand der Technik bekannten Vorrichtung zum Einpressen von Isolierstegen;
- Fig. 2: eine Schnittansicht durch ein Rahmenprofil mit schematischer Darstellung einer erfindungsgemäßen Vorrichtung zum Einpressen von Isolierstegen; und
- Fig. 3: eine Seitenansicht der Ausführungsform gemäß Fig. 2.

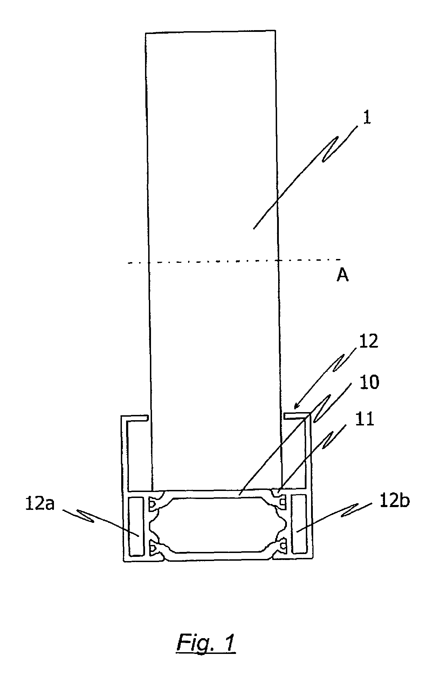

Fig. 1 zeigt einen Schnitt durch ein gewöhnliches Rahmenprofil 12, wie es aus dem Stand der Technik bekannt ist. Das Rahmenprofil 12 weist zwei gegenüberliegende Teilbereiche mit einer außenseitigen Profilkammer 12a sowie einer innenseitigen Profilkammer 12b auf. Eine erste Walze 1 dringt dabei in den Zwischenraum der beiden Teilbereiche des Rahmenprofils 12 ein um die Nutleiste 11 derart zu verformen, dass der Isoliersteg 10 spielfrei mit dieser verbunden wird. Dabei müssen die Nutleisten 11 direkt freiliegend unterhalb der ersten Walze angebracht sein.

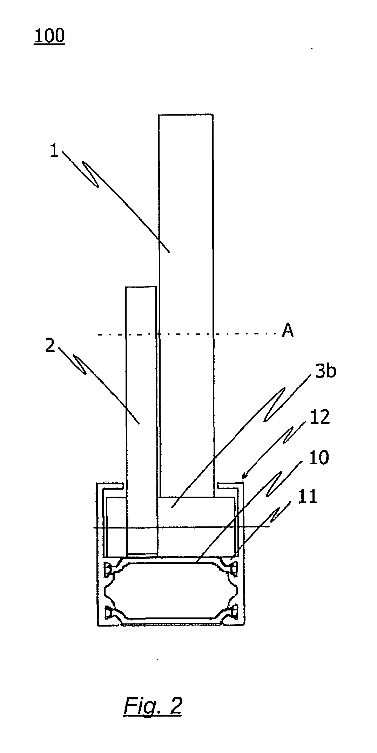

Wie in Fig. 2 gezeigt, werden mit der erfindungsgemäßen Vorrichtung auch nicht freiliegende Bereiche des Rahmenprofils 12 erreicht. Dazu ist ein Walzenträger 2 an der Seite der ersten Walze 1 vorgesehen. Selbstverständlich ist es auch denkbar, an beide Seiten der ersten Walze 1 einen Walzenträger 2 anzubringen.

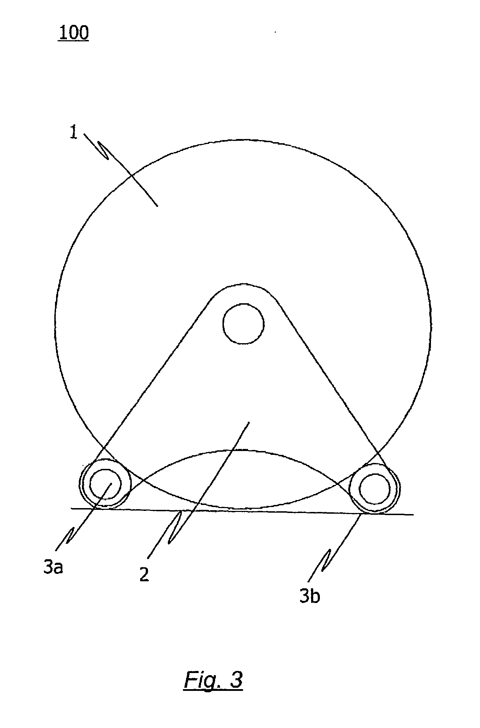

Ein solcher Walzenträger ist in Fig. 3 in einer Seitenansicht genauer dargestellt. Er ist an der Rotationsachse A der ersten Walze 1 angebracht und nimmt in dieser Ausführungsform zwei zweite Walzen 3a, 3b auf. Es sei jedoch erwähnt, dass es sich nicht zwangsweise um zwei zweite Walzen handeln muss, vielmehr ist es auch vorstellbar nur eine oder mehr als zwei zweite Walzen vorzusehen. Die zweiten Walzen 3a, 3b weisen einen kleineren Durchmesser als die erste Walze 1 auf. Dementsprechend ist es möglich, nicht freiliegende Nutleisten 11 zu erreichen und zu verformen. Folglich kann, wie aus einem Vergleich der Figuren 1 und 2 sofort ersichtlich wird, ein breiterer Isoliersteg 10 eingebracht oder das Rahmenprofil 12 schmäler ausgestaltet werden. Im Einzelnen können, wie in der Ausführungsform nach Fig. 2 dargestellt, die Profilkammern 12a, 12b durch Isolierstege 10 ersetzt werden.

Fig. 3 zeigt weiterhin, dass die Walzen 3a, 3b des Walzenträgers in Kontakt mit der ersten Walze 1 stehen können. Dies ist der Stabilität der gesamten Vorrichtung dienlich, jedoch muss in diesem Fall selbstverständlich der Kontakt der ersten Walze 1 mit den Isolierstegen 10 vermieden werden, da es sonst zur Hinderung der Rollbewegung der Walzen kommt.

Es ist selbstverständlich ebenfalls möglich, die Walzen 3a, 3b derart auszugestalten, dass diese nicht in Kontakt mit der ersten Walze 1 stehen. In diesem Fall könnten dementsprechend auch alle Walzen in einer Ebene bewegbar angeordnet werden.

### Bezugzeichenliste

- 1: erste Walze
- 2: Walzenträger
- 3a, 3b: zweite Walzen
- 10: Isoliersteg
- 11: Nutleiste
- 12: Rahmenprofil
- 12a: außenseitige Profilkammer
- 12b: innenseitige Profilkammer

## Patentansprüche

1. Vorrichtung (100) zum Einpressen von Isolierstegen (10) in Nutleisten (11) eines Rahmenprofils (12), insbesondere Aluminium-Rahmenprofils bei der Herstellung von Verbundprofilen, wobei die Vorrichtung (100) eine erste Walze (1) mit einer Rotationsachse (A) aufweist, wobei die Vorrichtung (100) mindestens einen Walzenträger (2) aufweist, welcher mit der Rotationsachse (A) der ersten Walze (1) verbindbar und ausgebildet ist, mindestens eine zweite Walze (3a, 3b) aufzunehmen, welche einen kleineren Durchmesser als die erste Walze (1) aufweist,
**dadurch gekennzeichnet, dass**
der mindestens eine Walzenträger (2) mindestens zwei zweite Walzen (3a, 3b) aufnimmt und so ausgebildet ist, dass die mindestens zwei zweiten Walzen (3a, 3b) in Kontakt mit der ersten Walze (1) stehen.

2. Vorrichtung nach Anspruch 1,
wobei die mindestens zwei zweiten Walzen (3a, 3b) einen unterschiedlichen Durchmesser aufweisen zum sequentiellen Verformen der Nutleisten (11).

3. Vorrichtung (100) nach Anspruch 1 oder 2,
wobei der Walzenträger (2) so ausgebildet ist, dass eine erste der mindestens zwei zweiten Walzen (3a) vor der ersten Walze (1) und eine zweite der mindestens zwei zweiten Walzen (3b) hinter der ersten Walze (1) positioniert ist, zum gleichmäßigen Verteilen der Anpresskraft der ersten Walze (1) auf die mindestens zwei zweiten Walzen (3a, 3b)

## Claims

1. A device (100) for pressing insulating strips (10) into grooved bars (11) of a frame profile (12), particularly an aluminum frame profile, during the manufacturing of composite profiles, wherein the device (100) comprises a first roller (1) with one axis of rotation (A), wherein the device (100) comprises at least one roller carrier (2) connectable to the axis of rotation (A) of the first roller (1) and designed to receive at least one second roller (3a, 3b) having a smaller diameter than the first roller (1),
**characterized in that**
the at least one roller carrier (2) receives at least two second rollers (3a, 3b) and is designed such that the at least two second rollers (3a, 3b) contact the first roller (1).

2. The device according to claim 1,
wherein the at least two second rollers (3a, 3b) have differing diameters to sequentially deform the grooved bars (11).

3. The device (100) according to claim 1 or 2,
wherein the roller carrier (2) is designed such that a first of the at least two second rollers (3a) is positioned in front of the first roller (1) and a second of the at least two second rollers (3b) is positioned behind the first roller (1) in order to uniformly distribute the pressing force of the first roller (1) on the at least two second rollers (3a, 3b).

## Revendications

1. Dispositif (100) pour enfoncer à la presse des barrettes isolantes (10) dans des réglettes à gorge (11) d'un profilé de cadre (12), en particulier d'un profilé de cadre en aluminium lors de la fabrication de profilés composites, ledit dispositif (100) comprenant un premier cylindre (1) avec un axe de rotation (A), le dispositif (100) comprenant au moins un porte-cylindre (2) qui est susceptible d'être relié à l'axe de rotation (A) du premier cylindre (1) et qui est réalisé pour recevoir au moins un second cylindre (3a, 3b) qui présente un diamètre plus petit que le premier cylindre (1),
**caractérisé en ce que**
ledit au moins un porte-cylindre (2) reçoit au moins deux seconds cylindres (3a, 3b), et est réalisé de telle façon que lesdits au moins deux seconds cylindres (3a, 3b) sont en contact avec le premier cylindre (1).

2. Dispositif selon la revendication 1,
dans lequel lesdits au moins deux seconds cylindres (3a, 3b) présentent un diamètre différent pour la déformation séquentielle des réglettes à gorge (11).

3. Dispositif (100) selon la revendication 1 ou 2,
dans lequel le porte-cylindre (2) est réalisé de telle façon qu'un premiers desdits au moins deux seconds cylindres (3a) est positionné devant le premier cylindre (1) et qu'un second desdits au moins deux seconds cylindres (3b) est positionné derrière le premier cylindre (1), pour répartir régulièrement la force de pressage du premier cylindre (1) sur lesdits au moins deux seconds cylindres (3a, 3b).
